(19) Europäisches Patentamt
European Patent Office
Office européen des brevets

(11) **EP 2 069 775 B1**

(12) **EUROPEAN PATENT SPECIFICATION**

(45) Date of publication and mention
of the grant of the patent:
**11.07.2018 Bulletin 2018/28**

(51) Int Cl.:
***G01N 29/02*** *(2006.01)*    ***G01N 29/24*** *(2006.01)*

(21) Application number: **07820413.8**

(22) Date of filing: **20.09.2007**

(86) International application number:
**PCT/EP2007/059975**

(87) International publication number:
**WO 2008/034878 (27.03.2008 Gazette 2008/13)**

(54) **METHOD AND DEVICE FOR DETERMINING CHARACTERISTICS OF A MEDIUM IN FORM OF A LIQUID OR A SOFT MATERIAL**

VERFAHREN UND VORRICHTUNG ZUR BESTIMMUNG DER EIGENSCHAFTEN EINES MEDIUMS IN FORM EINER FLÜSSIGKEIT ODER EINES WEICHEN MATERIALS

PROCÉDÉ ET DISPOSITIF DE DÉTERMINATION DES CARACTÉRISTIQUES D'UN MILIEU SOUS FORME DE LIQUIDE OU DE MATÉRIAU MOU

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **20.09.2006 DE 102006044679**

(43) Date of publication of application:
**17.06.2009 Bulletin 2009/25**

(73) Proprietors:
• **Hochschule für angewandte Wissenschaften Fachhochschule Coburg**
**96450 Coburg (DE)**
• **SensAction AG**
**96450 Coburg (DE)**

(72) Inventors:
• **LINDNER, Gerhard**
**96450 Coburg (DE)**
• **BAIER, Martin**
**96138 Burgebrach (DE)**
• **SIEWERT, Bernd**
**93051 Regensburg (DE)**

• **FISCHER, Sebastian**
**96264 Altenkunstadt (DE)**
• **GRASER, Rainer**
**92690 Pressath (DE)**
• **UNTERBURGER, Martin**
**91301 Forchheim (DE)**

(74) Representative: **Maikowski & Ninnemann Patentanwälte Partnerschaft mbB Postfach 15 09 20 10671 Berlin (DE)**

(56) References cited:
EP-A- 0 212 470     WO-A-02/077635
US-A- 4 331 025     US-A1- 2004 031 322
US-B1- 6 513 365

• BALASUBRAMANIAM KRISHNAN ET AL: "High temperature ultrasonic sensor for the simultaneous measurement of viscosity and temperature of melts" REVIEW OF SCIENTIFIC INSTRUMENTS, AIP, MELVILLE, NY, US, vol. 70, no. 12, 1 December 1999 (1999-12-01), pages 4618-4623, XP012037235 ISSN: 0034-6748

## Description

The invention relates to a method and a device for measuring physical or chemical characteristics and properties of liquids and/or of soft material including highly viscous, doughy or paste-like mediums using an acoustic transfer system comprising a sender, an acoustic waveguide and a receiver, wherein the acoustic waveguide encircles an interior space to be filled with the medium the characteristics of which are to be determined. To this end, surface acoustic waves are generated in the waveguide by a sender and part of the surface acoustic energy associated with the surface acoustic waves is coupled into the medium contained in the interior space defined by the acoustic waveguide and encircled by its external wall

Here, the term "soft material" refers to materials which are similar to liquids as far as the propagation of sound is concerned, e.g., propagation of sound waves having only longitudinal modes and similar velocities of sound), but which may possess a certain (limited) form stability (stability in shape), such as (biological) tissues or gels.

Due to the reciprocity of the coupling between the external wall of the acoustic waveguide and the medium to be measured, part of the energy associated with the volume sound waves propagating in the liquid is coupled back into the external wall of the acoustic waveguide so that surface acoustic waves are excited therein. By measuring and evaluating certain properties, such as the velocity or the amplitude, of the those surface acoustic waves physical and chemical characteristics of the medium may be determined.

In order to perform such measurements the waveguide may be dipped into the medium to be measured or the medium to be measured may be filled into the interior space of the waveguide.

If the liquid or soft material contained in the interior space of the waveguide allows only for a propagation of sound by longitudinal sound waves, then the energy associated with surface acoustic waves excited in the external wall of the waveguide and propagating along the inner surface of the waveguide is partly coupled into the medium contained in the interior space of the waveguide provided that the velocity of sound in the medium is smaller than the velocity of sound of the surface acoustic waves on the inner surface of the waveguide (forming an interface with the liquid). This condition can be fulfilled for a number of combinations of a liquid or soft matter (such as water, oil, gum) to be measured with a solid material to be used for the external wall of the waveguide (such as glass or steal).

The volume sound waves are coupled into the medium to be measured under an angle $\delta$ with respect to a vertical reference line of the inner surface of the waveguide

$$\delta = \arcsin (c_M/c_S),$$

wherein $c_M$ is the velocity of sound of the volume sound waves within the medium to be measured and $c_S$ is the velocity of sound of the surface acoustic waves propagating along the inner surface of the acoustic waveguide.

As this interaction is reciprocal part of the energy associated with the volume sound waves propagating in the medium to be measured is coupled back into the external wall of the waveguide so that surface acoustic waves are excited therein.

A device and a method for determining chemical and physical properties and other characteristics of liquids and soft material, such as viscous media, is described in US 6,513,365 B1 as well as in EP 07820413. It is an object of the invention to provide a new method and a new device for determining characteristics of liquids and soft material.

This is achieved by choosing a thickness of at least a portion of the external wall of the waveguide, i.e. a distance between the inner surface and the outer surface of the acoustic waveguide, such that concurrent surface acoustic waves are propagating on both the inner and outer surface of a waveguide (accompanied by a concurrent displacement of surface atomic layers on both surfaces). Such waves are Lamb or transition type surface acoustic waves of Lamb wave and Rayleigh waves.

The concurrent propagation of surface acoustic waves on both surfaces of the acoustic waveguide (even upon excitation of surface acoustic waves by a sender on only one of those surfaces, in particular on the outer surface) results from the small thickness of the acoustic waveguide such that the surface acoustic waves propagating on its two surfaces are correlated. For example, there may exist a (definite) relationship between the phases of the surface acoustic waves propagating on the inner surface and on the outer surface and/or the energy involved with those surface acoustic waves may be interrelated.

A crucial property of surface acoustic waves enabling a conversion of those waves into a volume sound wave (and vice versa) upon contact with a liquid (or soft matter) is the existence of e transverse component in the displacement of surface acoustic layers which occurs for both Lamb waves and Rayleigh waves as well as the transition regime between those two wave types.

The invention is relating to a device and a method, whereby Lamb waves are propagating along the surfaces of the waveguide. This is the case because a distance between the inner and outer surfaces of the waveguide (i.e., a thickness of its external wall) is substantially smaller than the wavelength of the surface acoustic waves propagating along the inner and outer surfaces of the waveguide. The surface acoustic waves may have symmetrical and asymmetrical oscillation modes on both surfaces exhibiting different dispersion.

For frequencies of the surface acoustic waves in a range from 200 kHz to 200 MHz the maximum thickness to fulfil the above requirements may be found in a range from $10\mu m$ to 10mm (depending on the specific frequency in the above range of frequencies).

If the external walls of the acoustic waveguide are made of a piezoelectric material, then metallic electrodes, such as interdigital electrodes, may be used as a transducer (sender) to excite surface acoustic waves upon application of an alternating voltage/alternating current. If a non-piezoelectric material is used for the substrate forming the external walls of the waveguide, then additional provisions are necessary in order to be able to excite surface acoustic waves, such as piezoelectric elements to be coupled with the interdigital electrodes, a wedge-shaped transducer or mode conversion.

The volume sound waves propagating within the interior space of the waveguide are exclusively transmitted by the medium to be measured.

According to one aspect of the invention the acoustic waveguide contains at least one plate defining a flat interior surface, wherein the sender is utilized for exciting surface acoustic waves in said plate; the sender being disposed on the exterior surface of the plate. More specifically, the wave guide may contain two (identical) plates being arranged opposite to each other and each defining an inner surface of the waveguide, wherein the sender is arranged for exciting surface acoustic waves in at least one of the plates.

According to one embodiment, a sender may be disposed on a first plate and a receiver may be disposed on the second, opposite plate of the waveguide. According to another embodiment, a sender and a receiver may be disposed on two different portions of one and the same plate defining a flat inner surface of the waveguide, wherein the two portions of the plate are separated by a decoupling element which dampens the transmission or prevents the transmission of surface acoustic waves between the two portions of the plate.

At least one of the sender and the receiver is located on an outer surface of the waveguide and at least a part of the outer surface of the acoustic waveguide is covered by a gas which counteracts the uncoupling of acoustic wave energy from the wave guide into the surrounding. In accordance with the present invention, a length of the waveguide along a direction of extension is such that a volume sound wave propagating in the medium to be measured on a zig-zag path interacts with the inner surface of the acoustic waveguide at several interaction points which are spaced from each other and where a conversion of a volume sound wave into a surface acoustic wave may occur. (The conversion of energy associated with surface acoustic waves into volume sound wave energy and/or vice versa takes place at the interface defined by the inner surface of the waveguide.)

To achieve a maximum flexibility, a plurality of transducers may be disposed on the waveguide each of which may serve as both a sender and a receiver.

According to yet another aspect of the invention, one transducer is utilized as both a sender and a receiver and the acoustic waveguide comprises a reflecting portion which reflects surface acoustic waves and volume sound waves generated by said transducer back to the transducer.

Upon application of an alternating voltage (or an alternating current, if applicable), the sender generates short wave pulses propagating along the waveguide and being partly converted in volume sound waves propagating the medium to be measured.

In order to determine characteristics of the medium to be measured, the propagation delay of wave pulses between the sender and the receiver and/or the amplitude of the wave pulses at the receiver is measured. In general, said propagation delay and/or said amplitude are being measured for various propagation pulses propagating along different paths between the sender and the receiver. In addition, the time dependence of the amplitude and/or the propagation delay may be measured and evaluated in order to determine changes of characteristics of the medium and their time dependence.

In order to determine changes of a specific characteristic of a medium contained in the interior space of the waveguide, other characteristics of the medium are to be held constant, if possible.

The sender may also be operated by a continuous application of electric current/voltage so that continuous surface acoustic waves and volume sound waves are being generated.

By measuring the propagation delay of wave pulses between sender and receiver, the location of an interface between two media (with different densities) contained in the interior space of the waveguide may be determined.

Furthermore, the presence of certain substances within a liquid, such as the presence of solid particles or gas bubbles, may be determined by measuring said amplitude. And the movement and velocity of such substances is being determined by measuring the time dependence of the amplitude.

Furthermore, a cross section of the interior space defined by the acoustic waveguide (in particular, the distance between two plates of the waveguide) and the geometry of the inner surface of the waveguide may be determined by measuring said propagation delay and/or said amplitude.

Further characteristics of a medium which may be determined include at least one of the following characteristical properties:

- temperature of the medium,

- a temperature gradient within the medium,

- changes of the temperature and/or temperature gradient,

- the viscosity of the medium,

- a viscosity gradient within the medium,

- changes of the viscosity an/or viscosity gradient.

In order to determine the gradient of properties of a liquid or of a soft material which influences the propagation delay and/or the amplitude, these quantities are measured for various wave pulses propagating through the acoustic waveguide and through the medium contained in the interior space of the waveguide along different paths.

A velocity of flow of a liquid contained in the interior space of the waveguide may be determined by measuring how the propagation delay is affected by the flow.

By providing an adjustment mechanism for adjusting the distance between two plates of the acoustic waveguide arranged opposite to each other, it is possible to measure forces acting on the waveguide provided that such forces lead to an adjustment of the distance between the two plates.

The claimed method and device may also be utilized for determining changes of the acoustic impedance at an interface between a liquid another medium contained in the interior space of the acoustic waveguide by measuring the amplitude of the output signal generated by the receiver. This is comparable to ultrasonic measurements used for medical diagnosis.

Various embodiments of the invention will be described in more detail hereinafter with reference to the drawings, in which:

Fig. 1      shows a schematic sectional view of a waveguide comprising two parallel plates arranged opposite to each other and serving as a device for measuring characteristic properties of a liquid contained between the two plates;

Fig. 2      shows a use of the waveguide according to Figure 1 for determining the location of an interface between two liquids;

Fig. 3a     shows the signal of a sender which feeds acoustic wave energy into the waveguide according to Figures 1 and 2;

Fig. 3b     shows the signal of a receiver assigned to the waveguide of Figure 1 which results from a homogeneous liquid contained in an interior space between the two plates;

Fig. 3c     shows the signal of a receiver assigned to the waveguide of Figure 2 which results from the existence of an interface between two different liquids contained in the interior space between the two plates;

Fig. 4a     shows the waveguide of Figure 1, wherein a gas bubble exists in the liquid contained in the interior space between the two plates;

Fig. 4b     shows the waveguide of Figure 4a, wherein the location of the gas bubble has changed;

Fig. 5a     shows the signal of a receiver assigned to the waveguide of Figures 4a and 4b in a case where no gas bubbles exist in the liquid;

Fig. 5b     shows the signal of a receiver assigned to the waveguide of Figures 4a and 4b in a case where a gas bubble can be found in a first position within the liquid;

Fig. 5c     shows the signal of a receiver assigned to the waveguide of Figures 4a and 4b in a case where a gas bubble can be found in a second position within the liquid;

Fig. 6      shows a modification of the waveguide according to Figure 1 wherein a sender and a receiver are assigned to one and the same plate of the waveguide;

Fig. 7      shows a modification of the waveguide according to Figure 1 wherein one transducer assigned to the waveguide serves as a sender and as a receiver;

Fig. 8a     shows a modification of the waveguide according to Figure 1 wherein adjusting means are provided which allow for a variation of the distance between the two plates;

Fig. 8b     shows a modification of the waveguide according to Figure 1 wherein an elastically deformable medium is contained between the two plates which allows for a variation of the distance between the two plates upon deformation of the medium.

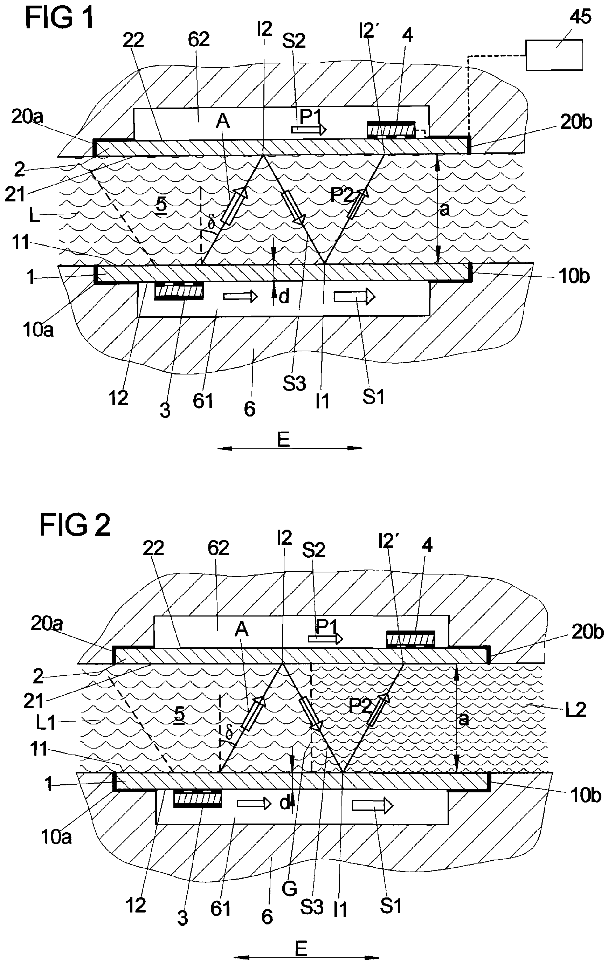

Figure 1 shows a schematic sectional view of an acoustic waveguide comprising two plates 1, 2 consisting of a non-piezoelectric material which are arranged opposite to each other with a distance a.

Each of the plates 1, 2 forms a part of the acoustic waveguide, or more particularly, of the external wall of such waveguide. The external wall of the waveguide defines an interior space 5 which is encircled by said wall and which is to be filled with a liquid L. Each plate 1, 2 extends along a direction of extension E of the acoustic waveguide between a first end portion 10a, 20a and a second end portion 10b, 20b and comprises an (flat) inner surface 11, 21 (interior surface) faced towards the interior space 5 and an (flat) outer surface 12, 22 (exterior surface) facing away from the interior space 5.

The waveguide and in particular its two plates 1, 2 are accommodated in a housing 6. The housing defines chambers 61, 62 arranged adjacent to the outer surfaces 12, 22 of the plates 1, 2. The chambers 61, 62 are filled with air or any other gas or material which suppresses the decoupling of acoustic wave energy from the respective plate 1, 2 into the adjacent chamber 61, 62. The end portions 10a, 10b; 20a, 20b of the plates 1, 2 are fixed to the housing 6 in a gas-tight manner so that the gas (air) contained in the chambers 61, 62 does not escape.

A sender 3 formed by a piezoelectric transducer and comprising interdigital electrodes is located on the outer surface 12 of a first plate 1 within the chamber 61 positioned adjacent to said outer surface 12. The sender 3 is arranged for exciting surface acoustic waves in the first plate 1 if an electric voltage is applied to the sender 3.

A receiver 4 is located on the outer surface 22 of the other plate 2 within the chamber 62 positioned adjacent to said outer surface 22 and is spaced from the sender 3 along the direction of extension E of the waveguide and in particular of the plates 1, 2. The receiver 4 is formed by a piezoelectric transducer comprising interdigital electrodes and creates an (electrical) output signal upon receipt of (surface) acoustic waves.

The two plates 1, 2 may consist of a non-piezoelectric material and have a thickness d which is smaller or equal to the wavelength of surface acoustic waves excited within those plates 1, 2 by the sender 3. This means that the surface acoustic waves propagating within the plates 1, 2 include Lamb waves (or wave types in the transition regime of Lamb waves and Rayleigh waves) which propagate on both the inner surface 11, 21 and the outer surface 12, 22 of each plate 1, 2. The thickness d of the plates 1, 2 is substantially smaller than the wavelength of the acoustic waves propagating within the plates 1, 2 then those waves will consist primarily of surface acoustic waves in the form of Lamb waves. The surface acoustic waves will propagate on both surfaces 11, 12; 21, 22 of each plate 1, 2, i.e. on the inner surface 11, 21 as well as on the outer surface 12, 22 of the respective plate 1, 2.

If the sender 3 of the device shown in Figure 1 is activated by supplying an (alternating) electrical voltage to the sender 3 then surface acoustic waves S1 are generated within the first plate 1 of the acoustic waveguide which propagate on both surfaces 11, 12 of said plate 1 along its direction of extension E. A part of the acoustic wave energy involved with the Lamb waves propagating along the inner surface 11 of the first plate 1, i.e. along the interface between the first plate 1 and a liquid L contained in the interior space 5 of the waveguide, is coupled into the liquid L such that a volume sound wave S3 is excited within the liquid L; the direction of propagation of that volume sound wave having a specific angle $\delta$ with respect to a vertical reference line subtending the flat inner surface 11 of first plate 1.

As the volume sound wave S3 arrives at the flat inner surface 21 of the opposite, second plate 2, part of its energy is coupled into said plate 2 so that surface acoustic waves S2 in form of Lamb waves (or surface waves of the transition type) are propagating along the direction of extension E of the second plate 2, more specifically on both the inner surface 21 and the outer surface 22 of said plate 2.

Each time the volume sound wave S3 impinges against an inner surface 11 or 21 of the plates 1, 2, part of the energy associated with the volume sound wave is coupled into the respective plate 1, 2 and surface acoustic waves in the form of Lamb waves (or surface waves of the transition type) are created therein. The dampening of the volume sound waves S3 as they propagate along a zig-zag path within the liquid L is indicated by the decreasing size of the arrows A along the direction of propagation of the volume sound waves S3. At the same time, the transfer of wave energy from the liquid L into the plates 1, 2 at the interfaces formed by the inner surfaces 11, 21 leads to an increase of the acoustic wave energy involved with the surface acoustic waves S1, S2 (Lamb waves or surface waves of the transition type) propagating along the plates 1, 2. This is indicated by the size of the arrows involved with those surface acoustic waves S1, S2.

Due to the fact that surface acoustic waves propagate along both surfaces 11, 12; 21 22 of the plates 1, 2, there are always surface acoustic waves propagating along the outer surfaces 12, 22 of those plates. Such surface acoustic waves may propagate over significant distances along the direction of extension E without being completely converted into volume sound waves (at the interfaces formed by the inner surfaces 11, 21).

According to Figure 1, a volume sound wave S3, coupled into the liquid L under an angle $\delta$ with respect to a vertical reference line, may either reach the receiver 4 by propagating almost exclusively along a zig-zag path within the liquid L and by being coupled into the second plate 2 at an interaction point I2' close to the receiver 4. On the other hand a part of the wave energy associated with the volume sound waves S3 is coupled into the second plate 2 at an interaction point distant from the receiver 4. Thus, corresponding surface acoustic waves S2 propagate over significant distance along the second plate 2 before reaching the receiver 4.

In the simplified embodiment shown in Figure 1, the volume sound waves S3 either propagate exclusively within the liquid L before reaching the receiver 4 and being coupled into the second plate 2 at an interaction point I2' just before reaching the receiver 4 or they are coupled into the second plate at an interaction point I2 with a significant distance from the receiver 4. This is due to the fact that in the simplified embodiment of Figure 1 the volume sound wave propagating within the liquid L has only one interaction point I1 with the first plate 1 and only two interaction points I2, I2' with the second plate 2. This means that there are only two different paths along which a volume sound wave S3 coupled into the liquid L just behind the sender 3 can propagate to the receiver 4, namely either almost exclusively within the liquid L until reaching the interaction point I2' in front of the receiver 4 or only partly within the liquid L until being coupled into the second plate 2 at an interaction point I2 distant from the receiver 4. In reality, more complex situations with a larger number of interaction points I1, ... , I2, I2', ... and different paths P1, P2, ... will occur.

As will be discussed in more detail below the different propagation delay involved with the different paths between sender 3 and receiver 4 are evaluated in an evaluation unit 45 (connected to the receiver 4) for determining characteristic properties of the fluid L contained between the two plates 1, 2.

In the following, the path along which the volume sound waves S3 propagate essentially exclusively within the liquid L will be denoted as path P2 and the path along which a wave excited by the sender 3 propagates only partly within the liquid L as a volume sound wave S3 and for a substantial part within the second plate 2 as a surface acoustic wave will be denoted as path P1, cf. Figure 1.

Whereas a homogeneous liquid L is contained in the interior space 5 between the two plates 1, 2 shown in Figure 1, two different liquids L1, L2 are contained in that interior space 5 shown in Figure 2. The two liquids L1, L2 form an interface G.

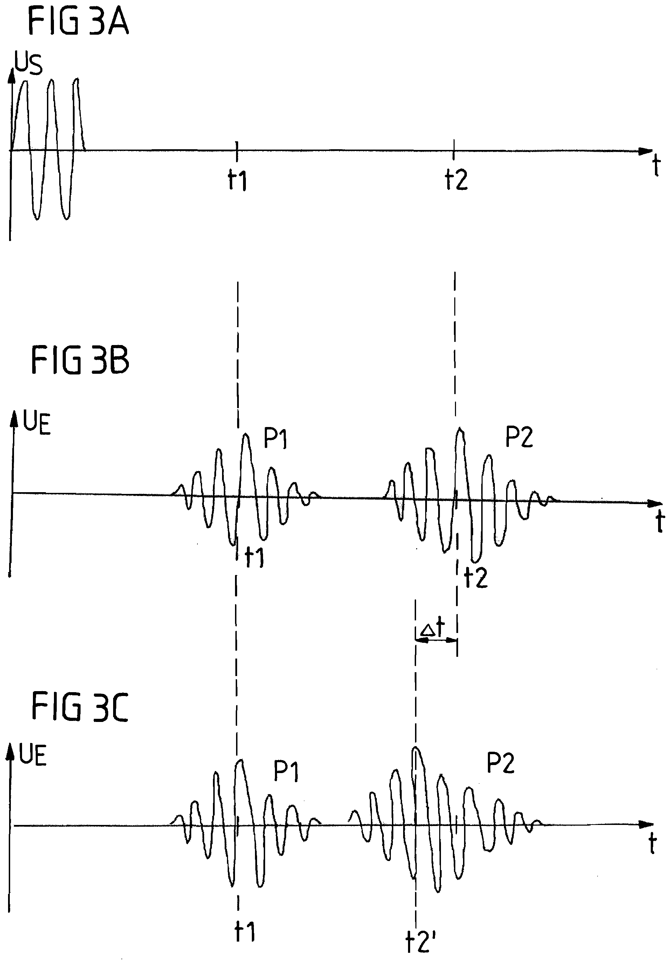

According to Figure 3a the sender 3 shown in Figures 1 and 2 is actuated by a short voltage pulse (alternating voltage $U_S$) at a time t= so that a short wave pulse is excited within the first plate 1 by the sender 3.

Figure 3b shows the electric output signal $U_E$ (alternating voltage) of the receiver 4 in a situation according to Figure 1. Based on the wave pulse excited by the sender 3 the receiver 4 will receive two wave pulses at different times t1 and t2, wherein the first signal occurring at time t1 corresponds to the propagation of a wave pulse along path the P1 and the signal produced at time t2 corresponds to the propagation of a wave pulse along the path P2.

The time difference t2 - t1 between the two output signals produced by the receiver 4 reflects the different lengths of the two paths P1 and P2 and also the different velocity of sound within the liquid L1 on the one hand and the second plate 2 on the other hand. Thus, the time difference t2 - t1 allows for a determination of characteristic (physical and chemical) properties of the liquid L which influence the velocity of sound (sound-propagation velocity) within the liquid and/or the characteristic angle $\delta$ under which volume sound waves S3 are coupled into the liquid L after the excitation of surface acoustic waves (Lamb waves) in the first plate 1 by the sender 3.

Figure 3c shows the (electric) signal $U_E$ generated by the receiver 4 under the conditions shown in Figure 2, i.e. if not only the liquid of Figure 1 but also a second liquid L2 is contained in the interior space 5 between the two plates 1, 2. The presence of a second liquid L2 leads to a shift in the propagation delay t2' - t0 for the volume sound waves along the path P2 because the velocity of sound of the second liquid L2 is different from the velocity of sound of the first liquid L1. In the present case the velocity of sound of the second liquid L2 is larger than the velocity of sound of the first liquid L1 (which is identical to the liquid L contained in the interior space 5 between the two plates 1, 2 according to Figure 2) because the propagation delay t2' - t0 (Figure 3c referring to the conditions of Figure 1) is shorter than the propagation delay t2 - t0 (Figure 3b referring to the conditions of Figure 1). Clearly, the propagation delay t2' - t0 shown in Figure 3c depends on the position of the interface G between the two liquids L1, L2 so that the position of the interface G may be determined from the propagation delay t2' - t0. By measuring the time dependence of this propagation delay t2' - t0 changes in the position of the interface G and the velocity of a possible movement of the interface G may also be determined.

From Figures 3b and 3c it is obvious that the propagation delay t1 - t0 of the wave pulse propagating along the first path P1 is not affected by the presence of the second liquid L2 in Figure 2. This is due to the fact that the first path P1 does not interfere with the second liquid L2. If the position of the interface G in the interior space 5 between the two plates 1, 2 was such that the first path P1 would interfere with the second liquid L2 then also the propagation delay t1 - t0 relating to the first path P1 would be affected.

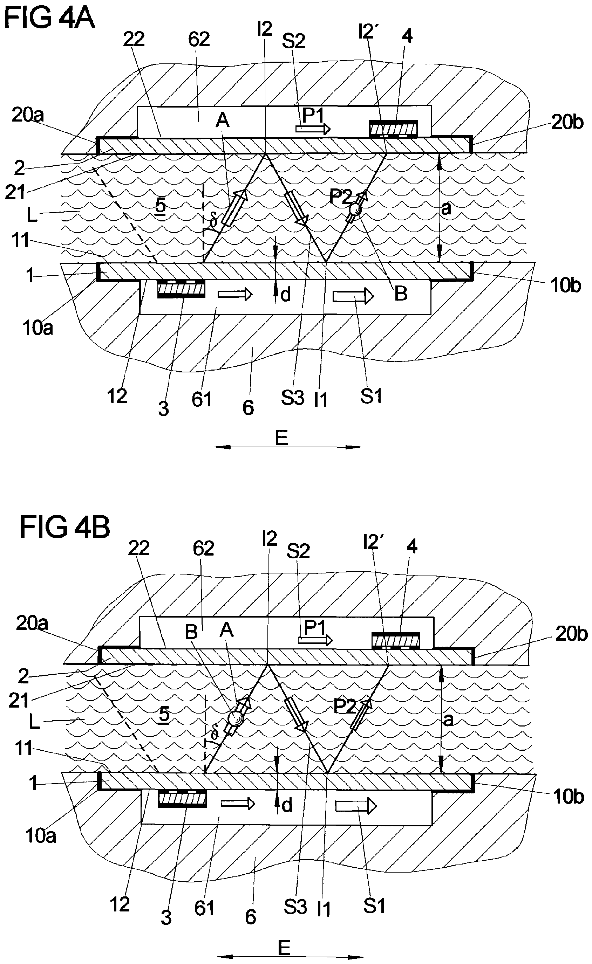

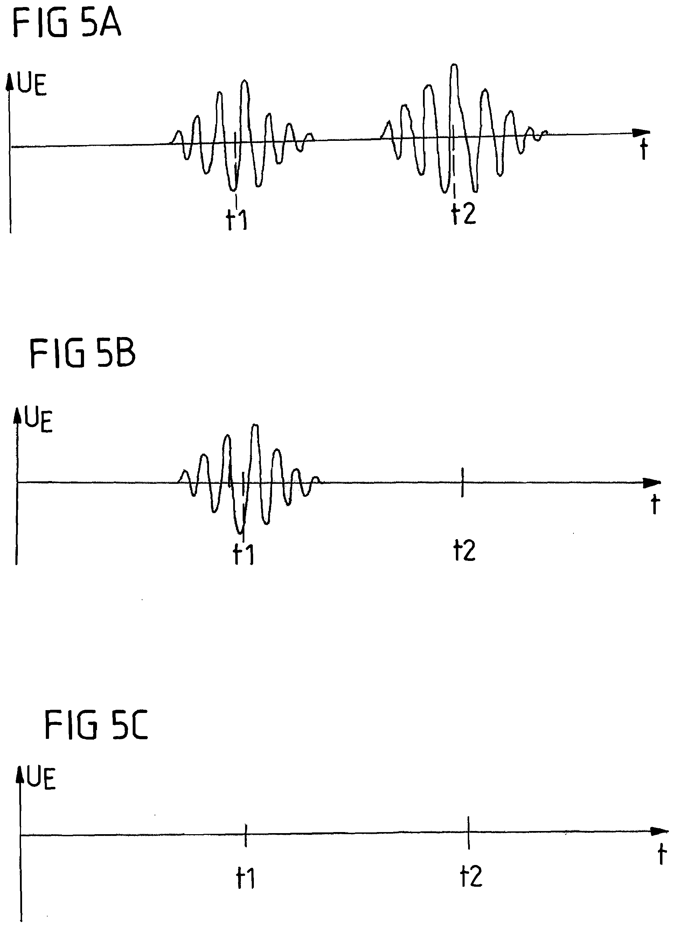

According to Figures 4a and 4b a gas bubble B is moving in a liquid L contained in the interior space 5 between the two plates 1, 2. Depending on the position of the gas bubble B within the liquid L the propagation of volume sound waves S3 along a certain path is affected by a rearward reflection of certain wave pulses as can be seen from Figures 5b and 5c which show the output signal of the receiver 4 under the conditions of Figure 4a and Figure 4b, respectively. According to Figure 4a the position of the gas bubble B within the liquid L is such that only wave pulses propagating along the second path P2 are influenced (by reflection), cf. the output signal shown in Figure 5b. By contrast, according to Figure 4b the position of the gas bubble B within the liquid L is such that both the wave pulses propagating along the first path P1 and the wave pulses propagating along the second path P2 are affected (by reflection), cf. Figure 5c. For comparison Figure 5a shows the output signal of the receiver 4 in a situation where no gas bubbles are present in the liquid L or where the position of the gas bubbles is such that they do not affect the propagation of volume sound waves S3 within the liquid L.

For other impurities than bubbles contained in the liquid L dampening or annihilation of volume sound waves instead of or in addition to reflection my be relevant.

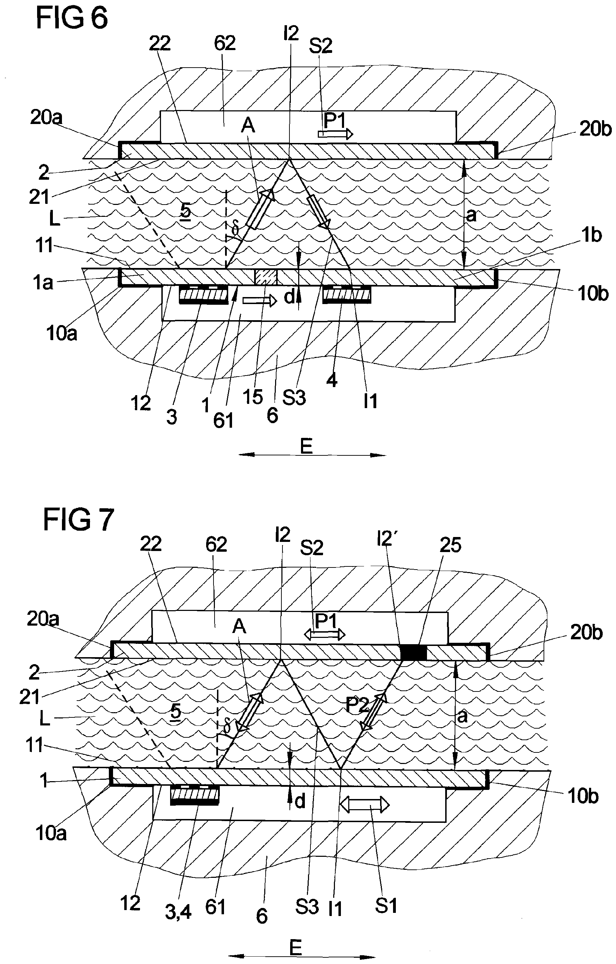

In the embodiment shown in Figure 6 the sender 3 and the receiver 4 are both assigned to a first plate 1 of the two plates 1, 2, i.e. the sender 3 and the receiver 4 are both located on a (outer) surface 12 of the first plate 1 (which faces the housing 6). In that case the first plate 1 is divided into two sub-plates 1a, 1b; the two sub-plates 1a, 1b being connected along a decoupling sector 15 so that they form a plate 1 having an inner surface 11 and an outer surface 12 to which the sender 3 and the receiver 4 are attached. More specifically, the sender 3 is attached to a portion of the outer surface 12 defined by a first sub-plate 1a and the receiver 4 is attached to a portion of the outer surface 12 defined by the second sub-plate 1b. The decoupling sector 15 provided between the two sub-plates 1a, 1b is configured such that surface acoustic waves propagating from one of the sub-plates 1a, 1b in the direction of the other sub-plate 1b, 1a are either annihilated or at least substantially damped by the decoupling sector 15. This is to avoid that wave pulses may propagate as surface acoustic waves (Lamb waves) from the sender 3 to the receiver 4 without propagating through the liquid L at all.

According to the embodiment shown in Figure 7, a single transducer serves both as a sender 3 and a receiver 4 and is attached to the outer surface 11, 12 of the first plate 1. Here, the second transducer (which is present in the embodiments shown in Figures 1, 2, 4a and 4b) is replaced by a reflecting portion 25 of the second plate 2 so that surface acoustic waves S2 (Lamb waves) and volume sound waves S3 reaching the reflecting portion 25 are being reflected and are finally received by the one transducer which serves as both a sender 3 and a receiver 4.

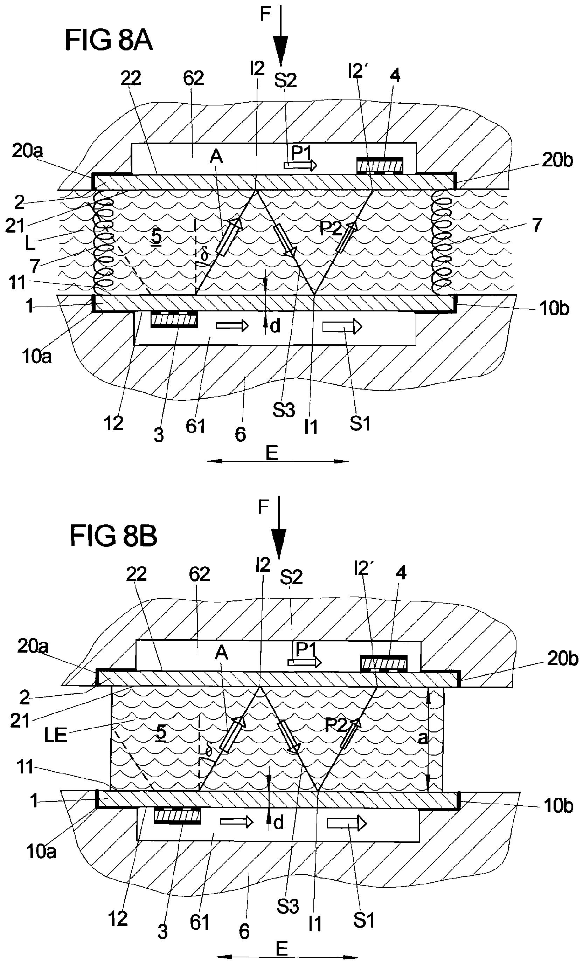

In the embodiment shown in Figure 8a the two plates 1, 2 of the acoustic waveguide are connected by elastic elements, e.g. in the form of a spring and more precisely in form of a compression spring designed as a coil spring. Thus, the distance a between the two plates 1, 2 may be adjusted by an external force F acting on one of the plates 1, 2 against the initial load of the springs 7.

Such device may either be used in order to adjust the distance between the two plates 1, 2 or to measure the force F acting on one of the plates 1, 2.

In the embodiment of Figure 8b the springs 7 shown in Figure 8a are replaced by elastical properties of the soft, elastic medium LE contained in the interior space 5 between the two plates 1, 2, e.g., gelatine or gum.

All embodiments of the invention described above have in common that due to the small thickness d of the plates 1, 2, Lamb waves or a transition type of Lamb waves and Rayleigh waves propagate along those plates 1, 2 and more particularly both on the inner surface 11, 21 and on the outer surface 12, 22 of the respective plate 1, 2. The thickness d of the plates 1, 2 is substantially smaller than the wavelength of the surface acoustic waves propagating in the plates 1, 2, then the amplitude of those waves (lamb waves) is essentially identical on both surfaces 11, 12 or 21, 22 of the respective plate 1 or 2. The surface acoustic waves have a longitudinal component as well as a transversal component on both surfaces 11 and 12 or 21 and 22 of the respective plate 1, 2, i.e. the near-surface atomic layers of each plate 1, 2 are deflected in the longitudinal direction as well as in the transversal direction with respect to the respective surface 11, 12; 21, 22.

In all embodiments non-piezoelectric substrates, such as substrates consisting of glass, aluminium or steel may be used as plates 1, 2. A detailed description how surface elastic waves are to be excited in such substrates and other materials can be found in R. M. White, "Surface Elastic Waves", Proc. IEEE 58 (1970), p. 1238 to 1276.

The energy associated with surface acoustic waves S1, S2 propagating along the inner surface 11, 21 of a plate 1, 2 is partly coupled into the liquid L contained between the two plates 1, 2 so that volume sound waves S3 are excited in the liquid L under a specific angle $\delta$ with respect to a vertical reference line and propagate within the liquid L along a zig-zag path between the two plates 1, 2. Part of the energy associated with those volume sound waves is coupled back into the plates 1, 2 and propagates in those plates 1, 2 in form of surface acoustic waves.

If the sender 3 is actuated by short voltage or current pulses ("bursts"), then the wave pulses propagating along the different paths between sender 3 and receiver 4 may be distinguished by the propagation delay at the time of arrival at the receiver 4. In general it holds that the larger the portion of a path between the sender 3 and the receiver 4 within the liquid, the larger the propagation time. This means that the larger the portion of a path between sender 3 and receiver 3 on the outer surface 12, 22 of a plate 1, 2, the smaller the propagation delay.

Since the velocity of sound within a liquid depends on its physical and chemical properties, such characteristics may be determined by measuring the propagation delay along various paths. Moreover, the propagation delay also depends on the geometry of the paths between sender 3 and receiver 4 so that the geometry of a waveguide may also be determined by measuring and evaluating said propagation delays.

By measuring the time dependence of certain propagation delays it is possible to determine changes as well as the velocity of changes of physical properties of a liquid. In practice the periodic time of the surface acoustic waves excited by the sender 3, the duration of a wave pulse, the settling time of the transducers forming the sender 3 and the receiver 4, the thickness d of and the distance a between the plates 1, 2 as well as a length of the plates 1, 2 along the direction of extension E of the waveguide have to be chosen and adjusted such that wave pulses propagating along different paths P1, P2, between sender 3 and receiver 4 may be distinguished on the basis of the output signal produced by the receiver 4 and may each be assigned to a specific path P1, P2, ...

between sender 3 and receiver 4.

For example, the periodic time of the surface acoustic waves should be smaller than the duration of a wave pulse as well as the propagation delay of the fastest wave pulse and the settling time of the transducers should be smaller than the time needed to cross the liquid L twice between the two plates 1, 2. Furthermore, the distance a between the plates 1, 2 should be larger than the distance covered by the volume sound waves during the duration of a wave pulse and the length of the waveguide along the direction of extension E should be large enough so that the sound waves S3 may cross the liquid L between the plates 1, 2 several times before reaching the receiver 4.

Other parameters of the device may be chosen and adjusted according to a specific use of the device. For example, by choosing a different thickness d for the first plate 1 on the one hand and the second plate 2 on the other hand, one may facilitate the differentiation between different paths P1, P2, ....

Among the useful applications of the devices described above are the following:

1. High precision concentration measurements: As changes of the propagation delay may be measured simultaneously for a number of wave pulses propagating along different paths P1, P2, ... between sender 3 and receiver 4 the concentration of substances in a liquid may be measured with accuracy. (Assuming that the concentration of a certain substance within the liquid affects properties of the sound waves, such as the velocity of sound.) By comparing the propagation delay of wave pulses propagating along different paths P1, P2, ... between sender 3 and receiver 4 one may also determine a concentration gradient.
Furthermore, by measuring the time dependence of the propagation delay along certain paths P1, P2, ... it is also possible to determine the time dependence of the concentration or a concentration gradient.

2. The discussion above under item 1. also applies to the determination of the temperature, a temperature gradient or the time dependence of the temperature of a liquid.

3. The existence of inhomogenities in a liquid, such as particles or gas bubbles, may be determined because such inhomogenities affect the propagation of volume sound waves in the liquid by reflecting, dampening or annihilating volume sound waves propagating along certain paths. This also allows for the determination of the location of such inhomogenities as well as of a movement and velocity of inhomogenities (by making time dependent measurements). In order to measure the annihilation or dampening of volume sound waves within the liquid L, the amplitude of the output signal at the receiver 4 has to be evaluated which reflects the amplitude of the wave pulses received at the receiver 4.

4. The device may also be used as a fluid level indicator because the number of different paths along which a wave pulse may propagate between sender 3 and receiver 4 depends on the fluid level of the liquid between the two plates 1, 2.

5. As the propagation delay involved with a certain path P1, P2, ... depends on the distance a between the two plates 1, 2, the device described above may also be used to measure the distance between the two plates 1, 2 and/or to measure a force or pressure acting on one of the plates 1, 2 which leads to a variation in the distance between the two plates, cf. Figures 8a and 8b. This means that the device can also be used as a force or pressure sensor. Furthermore, the device may be used as an inclination sensor because the propagation delay along a certain path P1, P2 depends on the geometry of the waveguide and in particular on the inclination of one plate with respect to the other plate.

6. In order to determine characteristic properties of a liquid L which affect the damping of volume sound waves in the liquid it is possible to compare the amplitude of wave pulses with different propagation delays, i.e. of wave pulses which cover different distances within the liquid L by propagating along different paths.

## Claims

1. A method for determining characteristics of a medium in form of a liquid or a soft material, the method comprising the following steps:

a) providing an acoustic waveguide defining an inner surface (11, 21) and an outer surface (12, 22) and delimiting an interior space (5) to be filled with the medium (L, L1, L2, LE) to be measured such that the outer surface (12, 22) faces away from the interior space (5) and the inner surface (11, 21) of the waveguide forms an interface with the medium,
b) providing a sender (3) for feeding acoustic wave energy into the waveguide,
c) providing a receiver (4) for receiving surface acoustic waves propagating along the waveguide,
d) exciting surface acoustic waves in the waveguide by means of the sender (3),
e) converting at least a part of the energy associated with the surface acoustic waves (S1) into volume sound waves (S3) of the medium (L, L1, L2, LE),

f) propagating both surface acoustic waves (S1, S2) and volume sound waves (S3) along a direction of extension (E) of the waveguide,

g) reconverting at least a part of the energy associated with the volume sound waves (S3) into acoustic wave energy of the waveguide thereby generating surface acoustic waves (S1, S2),

h) determining characteristics of the medium (L, L1, L2, LE) from a signal generated by the receiver (4) upon receipt of surface acoustic waves (S2),

**characterized in that**

- a thickness (d) of the acoustic waveguide, defined as a distance between the inner surface (11, 21) and the outer surface (12, 22) of the acoustic waveguide, is substantially smaller than the wavelength of surface acoustic waves excited in the waveguide so that surface acoustic waves in the form of Lamb waves are excited in the waveguide and concurrent Lamb waves are propagating on both the inner and the outer surface (11, 21; 12, 22) of the acoustic waveguide with essentially identical amplitudes on both surfaces (11, 21; 12, 22)

- wherein a length of the waveguide along a direction of extension (E) is such that a volume sound wave propagating in the medium (L, L1, L2, LE) interacts with the inner surface (11, 21) of the waveguide at a plurality of interaction sites (11, I2, I2') which are spaced from each other and where a conversion of the volume sound wave (S3) into a surface acoustic wave (S1, S2) may occur, so that the receiver (4) receives waves propagated through the medium (L, L1, L2, LE) along different paths (P1, P2, ...) and a propagation delay involved with the different paths (P1, P2, ...) between sender (3) and receiver (4) is measured in order to determine the characteristics of the medium (L, L1, L2, LE).

2. The method as claimed in claim 1, **wherein** the sender (3) emits wave energy in the form of energy pulses such that wave pulses are propagating in the waveguide and in the medium (L, L1, L2, LE).

3. The method as claimed in one of the preceding claims, wherein furthermore the amplitude of waves between the sender (3) and the receiver (4) is measured in order to determine characteristics of the medium (L, L1, L2, LE).

4. The method as claimed in claim 3, **wherein** a characteristic of the medium is being determined by further measuring an amplitude for several waves having propagated through the medium (L, L1, L2, LE) along different paths (P1, P2, ...).

5. The method as claimed in claim 3 or 4, **wherein** the presence of substances (B), such as particles or gas bubbles, in the medium (L) is being determined by measuring said propagation delay and/or said amplitude.

6. The method as claimed in claim 5, **wherein** a movement of the substance (B) is being determined by measuring the time dependence of said propagation delay and/or said amplitude.

7. The method as claimed in one of the preceding claims, **wherein** the waveguide contains at least one plate (1), wherein the sender (3) and the receiver (4) are disposed on two different portions (1a, 1b) of the plate (1) defining a flat inner surface (11) of the waveguide and wherein the two portions (1a, 1b) of the plate (1) are separated by a decoupling element (15) which dampens or prevents the transmission of acoustic surface waves between the two portions (1a, 1b) of the plate (1).

8. The method as claimed in one of the preceding claims, **wherein** at least part of the outer surface (12, 22) of the waveguide is covered by gas.

9. The method as claimed in one of the preceding claims, **wherein** volume sound waves (S3) propagating within the interior space (5) of the waveguide are exclusively transmitted by the medium (L, L1, L2, LE) to be measured.

10. The method as claimed in one of the preceding claims, **wherein** the waveguide contains at least two plates (1, 2) arranged opposite to each other and each defining an inner surface (11, 21) of the waveguide and wherein the sender (3) is arranged for exciting surface acoustic waves in at least one of the plates (1,2) and wherein a distance (a) between the two plates (1,2) and/or an inclination of the plates (1, 2) is adjustable.

11. Device for determining characteristics of a medium in form of a liquid or a soft material, the device comprising

a) an acoustic waveguide defining an inner surface (11, 21) and an outer surface (12, 22) and delimiting an interior space (5) to be filled with the medium (L, L1, L2, LE) to be measured such that the outer surface (12, 22) faces away from the interior space (5) and the inner surface (11, 21) of the waveguide forms an interface with the medium,

b) a sender (3) for exciting surface acoustic waves in the waveguide so that acoustic wave energy is fed into the waveguide,

c) an interface (11, 21) between the acoustic wave guide and the medium (L, L1, L2, LE) to be measured, where at least a part of the energy associated with the surface acoustic waves (S1) is converted into volume sound waves (S3) of the medium (L, L1, L2, LE),

d) an interface (11, 21) between the acoustic wave guide and the medium (L, L1, L2, LE) to be measured, where at least a part of the energy associated with the volume sound waves (S3) is reconverted into acoustic wave energy of the waveguide thereby generating surface acoustic waves (S1, S2) in the waveguide,

e) a receiver (4) for receiving surface acoustic waves propagating along the waveguide,

f) an evaluation unit (45) for determining physical characteristics of the medium (L, L1, L2, LE) from a signal generated by the receiver (4) upon receipt of surface acoustic waves (S2),

**characterized in that**

- a thickness (d) of the acoustic waveguide, defined as a distance between the inner surface (11, 21) and the outer surface (12, 22) of the acoustic waveguide, is substantially smaller than the wavelength of surface acoustic waves excited in the waveguide so that surface acoustic waves in the form of Lamb waves are excited in the waveguide and concurrent Lamb waves are propagating on both the inner and the outer surface (11, 21; 12, 22) of the acoustic waveguide with essentially identical amplitudes on both surfaces (11, 21; 12, 22)

- wherein a length of the waveguide along a direction of extension (E) is such that a volume sound wave propagating in the medium (L, L1, L2, LE) interacts with the inner surface (11, 21) of the waveguide at a plurality of interaction sites (11, I2, I2') which are spaced from each other and where a conversion of the volume sound wave (S3) into a surface acoustic wave (S1, S2) may occur, so that the receiver (4) receives waves propagated through the medium (L, L1, L2, LE) along different paths (P1, P2, ...) and a propagation delay involved with the different paths (P1, P2, ...) between sender (3) and receiver (4) is measured in order to determine the characteristics of the medium (L, L1, L2, LE).

12. A device as claimed in claim 11, the device being configured to perform a process according to one of claims 1 to 10.

**Patentansprüche**

1. Verfahren zum Bestimmen von Eigenschaften eines Mediums in Form einer Flüssigkeit oder eines weichen Materials, wobei das Verfahren die folgenden Schritte umfasst:

a) Bereitstellen eines akustischen Wellenleiters, der eine Innenoberfläche (11, 21) und eine Außenoberfläche (12, 22) definiert und einen Innenraum (5) begrenzt, der mit dem zu messenden Medium (L, L1, L2, LE) zu füllen ist, sodass die Außenoberfläche (12, 22) von dem Innenraum (5) abgewandt ist und die Innenoberfläche (11, 21) des Wellenleiters eine Grenzfläche mit dem Medium bildet,

b) Bereitstellen eines Senders (3) zum Zuführen von Akustikwellenenergie in den Wellenleiter,

c) Bereitstellen eines Empfängers (4) zum Empfangen von akustischen Oberflächenwellen, die sich entlang des Wellenleiters ausbreiten,

d) Anregen von akustischen Oberflächenwellen in dem Wellenleiter durch den Sender (3),

e) Umwandeln wenigstens eines Teils der Energie, die mit der akustischen Oberflächenwelle (S1) assoziiert ist, in Volumenschallwellen (S3) des Mediums (L, L1, L2, LE),

f) Ausbreiten von sowohl akustischen Oberflächenwellen (S1, S2) als auch Volumenschallwellen (S3) entlang einer Richtung einer Ausdehnung (E) des Wellenleiters,

g) Zurückumwandeln wenigstens eines Teils der Energie, die mit den Volumenschallwellen (S3) assoziiert ist, in Akustikwellenenergie des Wellenleiters, wodurch akustische Oberflächenwellen (S1, S2) erzeugt werden,

h) Bestimmen von Eigenschaften des Mediums (L, L1, L2, LE) aus einem Signal, das durch den Empfänger (4) beim Empfangen von akustischen Oberflächenwellen (S2) erzeugt wird,

**dadurch gekennzeichnet, dass**

- eine Dicke (d) des akustischen Wellenleiters, die als ein Abstand zwischen der Innenoberfläche (11, 21) und der Außenoberfläche (12, 22) des akustischen Wellenleiters definiert ist, wesentlich kleiner als eine Wellenlänge von akustischen Oberflächenwellen ist, die in dem Wellenleiter angeregt werden, sodass akustische Oberflächenwellen in der Form von Lamb-Wellen in dem Wellenleiter angeregt werden und sich gleichlaufende Lamb-Wellen auf sowohl der Innen- als auch der Außenoberfläche (11, 21; 12, 22) des akustischen Wellenleiters mit im Wesentlichen identischen Amplituden auf beiden Oberflächen (11, 21; 12, 22) ausbreiten,

- wobei eine Länge des Wellenleiters entlang einer Richtung einer Ausdehnung (E) derart ist, dass eine Volumenschallwelle, die sich in dem Medium (L, L1, L2, LE) ausbreitet, mit der Innenoberfläche (11, 21) des Wellenleiters an mehreren Interaktionsstellen (I1, I2, I2') interagiert, die voneinander beabstandet sind, und wobei eine Umwandlung der Volumenschallwelle (S3) in eine akustische Oberflächenwelle (S1, S2) auftreten kann, sodass der Empfänger (4) Wellen empfängt, die sich durch das Medium (L, L1, L2, LE) entlang unterschiedlicher Pfade (P1, P2, ...) ausgebreitet haben, und eine Ausbreitungsverzögerung, die mit den unterschiedlichen Pfaden (P1, P2, ...) zwischen dem Sender (3) und dem Empfänger (4) einhergeht, gemessen wird, um die Eigenschaften des Mediums (L, L1, L2, LE) zu bestimmen.

2. Verfahren nach Anspruch 1, **wobei** der Sender (3) Wellenenergie in der Form von Energiepulsen emittiert, sodass Wellenpulse in dem Wellenleiter und dem Medium (L, L1, L2, LE) ausbreiten.

3. Verfahren nach einem der vorhergehenden Ansprüche, **wobei** des Weiteren die Amplitude der Wellen zwischen dem Sender (3) und dem Empfänger (4) gemessen wird, um Eigenschaften des Mediums (L, L1, L2, LE) zu bestimmen.

4. Verfahren nach Anspruch 3, **wobei** eine Eigenschaft des Mediums bestimmt wird, indem ferner eine Amplitude für einige Wellen bestimmt wird, die sich entlang unterschiedlicher Pfade (P1, P2, ...) durch das Medium (L, L1, L2, LE) ausgebreitet haben.

5. Verfahren nach Anspruch 3 oder 4, **wobei** die Anwesenheit von Substanzen (B), wie etwa Teilchen oder Gasblasen, in dem Medium (L) bestimmt wird, indem die Ausbreitungsverzögerung und/oder die Amplitude gemessen wird.

6. Verfahren nach Anspruch 5, **wobei** eine Bewegung der Substanz (B) bestimmt wird, indem die Zeitabhängigkeit der Ausbreitungsverzögerung und/oder der Amplitude gemessen wird.

7. Verfahren nach einem der vorhergehenden Ansprüche, **wobei** der Wellenleiter wenigstens eine Platte (1) umfasst, wobei der Sender (3) und Empfänger (4) auf zwei unterschiedlichen Teilen (1a, 1b) der Platte (1) angeordnet sind, die eine flache Innenoberfläche (11) des Wellenleiters definieren, und wobei die zwei Teile (1a, 1b) der Platte (1) durch ein Entkopplungselement (15) separiert sind, das die Übertragung akustischer Oberflächenwellen zwischen den zwei Teilen (1a, 1b) der Platte (1) dämpft oder verhindert.

8. Verfahren nach einem der vorhergehenden Ansprüche, **wobei** wenigstens ein Teil der Außenoberfläche (12, 22) des Wellenleiters mit Gas bedeckt ist.

9. Verfahren nach einem der vorhergehenden Ansprüche, **wobei** Volumenschallwellen (S3), die sich innerhalb des Innenraums (5) des Wellenleiters ausbreiten, ausschließlich durch das zu messende Medium (L, L1, L2, LE) übertragen werden.

10. Verfahren nach einem der vorhergehenden Ansprüche, **wobei** der Wellenleiter wenigstens zwei Platten (1, 2) enthält, die einander gegenüberliegend angeordnet sind und die jeweils eine Innenoberfläche (11, 21) des Wellenleiters definieren, und wobei der Sender (3) zum Anregen von akustischen Oberflächenwellen in wenigstens einer der Platten (1, 2) angeordnet ist und wobei ein Abstand (a) zwischen den zwei Platten (1, 2) und/oder eine Neigung der Platten (1, 2) anpassbar ist.

11. Vorrichtung zum Bestimmen von Eigenschaften eines Mediums in Form einer Flüssigkeit oder eines weichen Materials, wobei die Vorrichtung Folgendes umfasst:

     a) einen akustischen Wellenleiter, der eine Innenoberfläche (11, 21) und eine Außenoberfläche (12, 22) definiert und einen Innenraum (5) begrenzt, der mit dem zu messenden Medium (L, L1, L2, LE) zu füllen ist, sodass die Außenoberfläche (12, 22) von dem Innenraum (5) abgewandt ist und die Innenoberfläche (11, 21) des Wellenleiters eine Grenzfläche mit dem Medium bildet,
     b) einen Sender (3) zum Anregen von akustischen Oberflächenwellen in dem Wellenleiter, sodass Akustikwellenenergie in den Wellenleiter zugeführt wird,
     c) eine Grenzfläche (11, 21) zwischen dem akustischen Wellenleiter und dem zu messenden Medium (L, L1, L2, LE), wobei wenigstens ein Teil der Energie, die mit den akustischen Oberflächenwellen (S1) assoziiert ist, in Volumenschallwellen (S3) des Mediums (L, 1, L2, LE) umgewandelt wird,
     d) eine Grenzfläche (11, 21) zwischen dem akustischen Wellenleiter und dem zu messenden Medium (L, 1, L2, LE), wobei wenigstens ein Teil der Energie, die mit den Volumenschallwellen (S3) assoziiert ist, zurück in Akustikwellenenergie des Wellenleiters umgewandelt wird, wodurch akustische Oberflächenwellen (S1, S2) in dem Wellenleiter erzeugt werden,
     e) einen Empfänger (4) zum Empfangen von akustischen Oberflächenwellen, die sich entlang des Wellenleiters ausbreiten,
     f) eine Auswertungseinheit (45) zum Bestimmen von physikalischen Eigenschaften des Mediums (L, L1, L2, LE) aus einem Signal, das durch den Empfänger (4) beim Empfangen von akustischen Oberflächenwellen (S2) erzeugt wird,

**dadurch gekennzeichnet, dass**

- eine Dicke (d) des akustischen Wellenleiters, die als ein Abstand zwischen der Innenoberfläche (11, 21) und der Außenoberfläche (12, 22) des akustischen Wellenleiters definiert ist, wesentlich kleiner als die Wellenlänge von akustischen Oberflächenwellen ist, die in dem Wellenleiter angeregt werden, sodass akustische Oberflächenwellen in der Form von Lamb-Wellen in dem Wellenleiter angeregt werden und sich gleichlaufende Lamb-Wellen auf sowohl der Innen- als auch der Außenoberfläche (11, 21; 12, 22) des akustischen Wellenleiters mit im Wesentlichen identischen Amplituden auf beiden Oberflächen (11, 21; 12, 22) ausbreiten

- wobei eine Länge des Wellenleiters entlang einer Richtung einer Ausdehnung (E) derart ist, dass eine Volumenschallwelle, die sich in dem Medium (L, L1, L2, LE) ausbreitet, mit der Innenoberfläche (11, 21) des Wellenleiters an mehreren Interaktionsstellen (I1, I2, I2') interagiert, die voneinander beabstandet sind, und wobei eine Umwandlung der Volumenschallwelle (S3) in eine akustische Oberflächenwelle (S1, S2) auftreten kann, sodass der Empfänger (4) Wellen empfängt, die sich durch das Medium (L, L1, L2, LE) entlang unterschiedlicher Pfade (P1, P2, ...) ausgebreitet haben, und eine Ausbreitungsverzögerung, die mit den unterschiedlichen Pfaden (P1, P2, ...) zwischen dem Sender (3) und dem Empfänger (4) einhergeht, gemessen wird, um die Eigenschaften des Mediums (L, L1, L2, LE) zu bestimmen.

**12.** Vorrichtung nach Anspruch 11, wobei die Vorrichtung dazu konfiguriert ist, einen Prozess nach einem der Ansprüche 1 bis 10 durchzuführen.

## Revendications

**1.** Procédé de détermination des caractéristiques d'un milieu sous la forme d'un liquide ou d'un matériau mou, le procédé comprenant les étapes suivantes :

a) fournir un guide d'onde acoustique définissant une surface interne (11, 21) et une surface externe (12, 22) et délimitant un espace intérieur (5) à remplir avec le milieu (L, L1, L2, LE) à mesurer de telle sorte que la surface externe (12, 22) est tournée à l'opposé de l'espace intérieur (5), et la surface interne (11, 21) du guide d'onde forme une interface avec le milieu,

b) fournir un émetteur (3) pour alimenter en énergie des ondes acoustiques dans le guide d'onde,

c) fournir un récepteur (4) pour recevoir des ondes acoustiques de surface se propageant le long du guide d'onde,

d) exciter des ondes acoustiques de surface dans le guide d'onde au moyen de l'émetteur (3),

e) convertir au moins une partie de l'énergie associée aux ondes acoustiques de surface (S1) en ondes sonores volumiques (S3) du milieu (L, L1, L2, LE),

f) propager à la fois des ondes acoustiques de surface (S1, S2) et des ondes sonores volumiques (S3) le long d'une direction d'extension (E) du guide d'onde,

g) reconvertir au moins une partie de l'énergie associée aux ondes sonores volumiques (S3) en énergie d'onde acoustique du guide d'onde, générant ainsi des ondes acoustiques de surface (S1, S2),

h) déterminer des caractéristiques du milieu (L, L1, L2, LE) à partir d'un signal généré par le récepteur (4) lors de la réception d'ondes acoustiques de surface (S2),

**caractérisé en ce que**

- une épaisseur (d) du guide d'onde acoustique, définie en tant que distance entre la surface interne (11, 21) et la surface externe (12, 22) du guide d'onde acoustique, est sensiblement inférieure à la longueur d'onde des ondes acoustiques de surface excitées dans le guide d'onde de sorte que les ondes acoustiques de surface sous la forme d'ondes de Lamb sont excitées dans le guide d'onde et des ondes de Lamb simultanées se propagent à la fois sur la surface interne et sur la surface externe (11, 21 ; 12, 22) du guide d'onde acoustique avec des amplitudes sensiblement identiques sur les deux surfaces (11, 21 ; 12, 22)

- une longueur du guide d'onde le long d'une direction d'extension (E) est telle qu'une onde sonore volumique se propageant dans le milieu (L, L1, L2, LE) interagit avec la surface interne (11, 21) du guide d'onde au niveau d'une pluralité de sites d'interaction (I1, I2, I2') qui sont espacés les uns des autres et où une conversion de l'onde sonore volumique (S3) en une onde acoustique de surface (S1, S2) peut se produire, de telle sorte que le récepteur (4) reçoit des ondes se propageant à travers le milieu (L, L1, L2, LE) le long de différents trajets (P1, P2,...) et un retard de propagation impliqué dans les différents chemins (P1, P2,...) entre l'émetteur (3) et le récepteur (4) est mesuré afin de déterminer les caractéristiques du milieu (L, L1, L2, LE).

**2.** Procédé selon la revendication 1, **dans lequel** l'émetteur (3) émet une énergie d'onde sous la forme d'impulsions d'énergie de telle sorte que des impulsions d'onde se propagent dans le guide d'onde et dans le milieu (L, L1, L2, LE).

3. Procédé selon l'une des revendications précédentes, **dans lequel** l'amplitude des ondes entre l'émetteur (3) et le récepteur (4) est en outre mesurée afin de déterminer des caractéristiques du milieu (L, L1, L2, LE) .

4. Procédé selon la revendication 3, **dans lequel** une caractéristique du milieu est déterminée par la mesure supplémentaire d'une amplitude pour plusieurs ondes se propageant à travers le milieu (L, L1, L2, LE) le long de différents trajets (P1, P2,...).

5. Procédé selon la revendication 3 ou 4, **dans lequel** la présence de substances (B), telles que des particules ou des bulles de gaz, dans le milieu (L), est déterminée par la mesure dudit retard de propagation et/ou de ladite amplitude.

6. Procédé selon la revendication 5, **dans lequel** un mouvement de la substance (B) est déterminé par la mesure de la dépendance temporelle dudit retard de propagation et/ou de ladite amplitude.

7. Procédé selon l'une des revendications précédentes, **dans lequel** le guide d'onde contient au moins une plaque (1), l'émetteur (3) et le récepteur (4) étant disposés sur deux parties différentes (1a, 1b) de la plaque (1) définissant une surface interne plate (11) du guide d'onde et les deux parties (1a, 1b) de la plaque (1) étant séparées par un élément de découplage (15) qui amortit ou empêche la transmission d'ondes de surface acoustiques entre les deux parties (1a, 1b) de la plaque (1).

8. Procédé selon l'une des revendications précédentes, **dans lequel** au moins une partie de la surface externe (12, 22) du guide d'onde est recouverte par du gaz.

9. Procédé selon l'une des revendications précédentes, **dans lequel** des ondes sonores volumiques (S3) se propageant à l'intérieur de l'espace intérieur (5) du guide d'onde sont exclusivement transmises par le milieu (L, L1, L2, LE) à mesurer.

10. Procédé selon l'une des revendications précédentes, **dans lequel** le guide d'onde contient au moins deux plaques (1, 2) disposées à l'opposé l'une de l'autre et définissant chacune une surface interne (11, 21) du guide d'onde, et l'émetteur (3) étant agencé pour exciter des ondes acoustiques de surface dans au moins une des plaques (1, 2), et une distance (a) entre les deux plaques (1, 2) et/ou une inclinaison des plaques (1, 2) étant réglable.

11. Dispositif pour déterminer des caractéristiques d'un milieu sous la forme d'un liquide ou d'un matériau mou, le dispositif comprenant

a) un guide d'onde acoustique définissant une surface interne (11, 21) et une surface externe (12, 22) et délimitant un espace intérieur (5) à remplir avec le milieu (L, L1, L2, LE) à mesurer de telle sorte que la surface externe (12, 22) est tournée à l'opposé de l'espace intérieur (5), et la surface interne (11, 21) du guide d'onde forme une interface avec le milieu,
b) un émetteur (3) pour exciter des ondes acoustiques de surface dans le guide d'onde de telle sorte qu'une énergie d'onde acoustique est introduite dans le guide d'onde,
c) une interface (11, 21) entre le guide d'onde acoustique et le milieu (L, L1, L2, LE) à mesurer, au moins une partie de l'énergie associée aux ondes acoustiques de surface (S1) étant convertie en ondes sonores volumiques (S3) du milieu (L, L1, L2, LE),
d) une interface (11, 21) entre le guide d'onde acoustique et le milieu (L, L1, L2, LE) à mesurer, au moins une partie de l'énergie associée aux ondes sonores volumiques (S3) étant reconvertie en énergie d'onde acoustique du guide d'onde, générant ainsi des ondes acoustiques de surface (S1, S2) dans le guide d'onde,
e) un récepteur (4) pour recevoir des ondes acoustiques de surface se propageant le long du guide d'onde,
f) une unité d'évaluation (45) pour déterminer des caractéristiques physiques du milieu (L, L1, L2, LE) à partir d'un signal généré par le récepteur (4) lors de la réception d'ondes acoustiques de surface (S2),

**caractérisé en ce que**

- une épaisseur (d) du guide d'onde acoustique, définie en tant que distance entre la surface interne (11, 21) et la surface externe (12, 22) du guide d'onde acoustique, est sensiblement inférieure à la longueur d'onde des ondes acoustiques de surface excitées dans le guide d'onde de sorte que des ondes acoustiques de surface sous la forme d'ondes de Lamb sont excitées dans le guide d'onde et des ondes de Lamb simultanées se propagent à la fois sur la surface interne et la surface externe (11, 21 ; 12, 22) du guide d'onde acoustique avec des amplitudes sensiblement identiques sur les deux surfaces (11, 21 ; 12, 22)

- une longueur du guide d'onde le long d'une direction d'extension (E) est telle qu'une onde sonore volumique se propageant dans le milieu (L, L1, L2, LE) interagit avec la surface interne (11, 21) du guide d'onde au niveau d'une pluralité de sites d'interaction (I1, I2, I2') qui sont espacés les uns des autres et où une conversion de l'onde sonore volumique (S3) en une onde acoustique de surface (S1, S2) peut se produire, de telle sorte que le récepteur (4) reçoit des ondes se propageant à travers le milieu (L, L1, L2, LE) le long de différents trajets (P1, P2,...) et un retard de propagation impliqué dans les différents chemins (P1, P2,...) entre l'émetteur (3) et le récepteur (4) est mesuré afin de déterminer les caractéristiques du milieu (L, L1, L2, LE).

12. Dispositif selon la revendication 11, le dispositif étant configuré pour réaliser un procédé selon l'une des revendications 1 à 10.

# FIG 1

# FIG 2

# FIG 3A

US

t1              t2         t

# FIG 3B

UE

P1          P2

t1              t2        t

$\Delta t$

# FIG 3C

UE

P1          P2

t1            t2'

## FIG 4A

## FIG 4B

FIG 5A

FIG 5B

FIG 5C

**FIG 6**

**FIG 7**

FIG 8A

FIG 8B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6513365 B1

- EP 07820413 A

**Non-patent literature cited in the description**

- **R. M. WHITE.** Surface Elastic Waves. *Proc. IEEE,* 1970, vol. 58, 1238-1276